# EUROPEAN PATENT SPECIFICATION

(11) **EP 3 916 255 B1**
(45) Date of publication and mention of the grant of the patent: **05.10.2022**
(21) Application number: 20176509.6
(22) Date of filing: 26.05.2020
(51) Int. Cl.: F16C 17/04, F01D 3/04

(54) **MULTI-STAGE AXIAL BEARINGS FOR TURBINES**
MEHRSTUFIGE AXIALLAGER FÜR TURBINEN
PALIERS AXIAUX À PLUSIEURS ÉTAGES POUR TURBINES

(43) Date of publication of application: 01.12.2021
(73) Proprietor: Siemens Energy Global GmbH & Co. KG, 81739 München (DE)
(72) Inventor: Vrbka, David, 61600 Brno (CZ)

(56) References cited:
- CN-A- 109 654 035
- JP-A- H08 189 302
- US-A1- 2020 040 732

## Description

### Field of invention

The present invention relates generally to axial bearings, in particular to an axial bearing for a rotating machine, for example a steam turbine.

### Art Background

Axial bearings providing a balance to thrust forces acting on a rotating shaft are generally known. In particular, bearings may be designed for steam turbines with significantly bigger exhaust area to be able to counterbalance residual axial forces generated in the reaction blading and not sufficiently balanced by other components of the steam turbine, for example by balance pistons.

In order to avoid axial bearings having one single disc of excessive diameter, multi-stage solutions may be implemented, which include a plurality of axially distanced discs. An example is disclosed in the patent application US 2020 040732.

Using a plurality of discs may cause misalignments, which determine undesired irregularities in the distribution of axial forces between the discs of the axial bearing.

It may be therefore desirable to provide a multi-stage axial bearing, where the distribution of axial forces is effectively controlled.

### Summary of the Invention

In order to achieve the objects defined above, an axial bearing system is provided. The system comprises:
a stationary housing,
a rotational shaft which is rotatable with respect to the stationary housing about an axis of rotation,
at least one main disc fixed to the rotational shaft,
at least one auxiliary disc fixed to the rotational shaft and distanced from the main disc along the axis of rotation,
at least one axial main pad connected to the stationary housing and active on at least one annular face of the main disc,
at least one axial auxiliary pad active on an annular face of the auxiliary disc, an axial force transmitted to the auxiliary disc through the axial auxiliary pad being regulatable through a pressurised actuation,
a plurality of temperature sensors for measuring the temperature of the main disc and the auxiliary disc,
a controller connected to the pressurised actuation and to the temperature sensors for regulating the axial force transmitted to the auxiliary disc through the axial auxiliary pad based on the temperature of the main disc and the auxiliary disc.

According to an aspect of the invention, a method of operating the above described axial bearing system is provided. The method includes the following steps performed in the controller:
determining at least a temperature difference between a temperature associated with the main disc and a temperature associated with the auxiliary disc,
operating the pressurised actuation for increasing the axial force transmitted to the auxiliary disc if the temperature difference is greater than a predefined temperature threshold. The temperature threshold may be comprised between 1° C and 10° C.

The present invention permits to efficiently balance the thrust force acting on the rotational shaft by means of the reading of the temperature sensors.

The above system may be conveniently integrated in a steam turbine. The steam turbine may be a steam condensing turbine with very low exhaust pressure or a powerful condensing steam turbine with very high steam parameters that allows designing a turbine casing with a small inlet part, due to low steam volume. The inlet part of the turbine casing is directly connected to the bearing bracket, therefore if the inlet part is small also the size of the bearing bracket is limited, and this leads also to a limited diameter of the axial bearing. In such cases having only one disc in the bearing may be not sufficient to compensate the axial forces.

According to embodiments of the present invention, the pressurised actuation comprises a pressurized cavity provided in the stationary housing, the pressure in the pressurized cavity being variable for variating the axial force transmitted to the auxiliary disc. The pressurised actuation may further comprise a regulating valve whose opening rate is regulatable by the controller.

According to embodiments of the present invention, the temperature sensors are attached to the axial main pad and the axial auxiliary pad. The temperature sensors may attached to the axial main pad and the axial auxiliary pad in respective positions adjacent to the main disc and the auxiliary disc. Alternatively or additionally, the temperature sensors may be directly attached to the main disc and the auxiliary disc.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

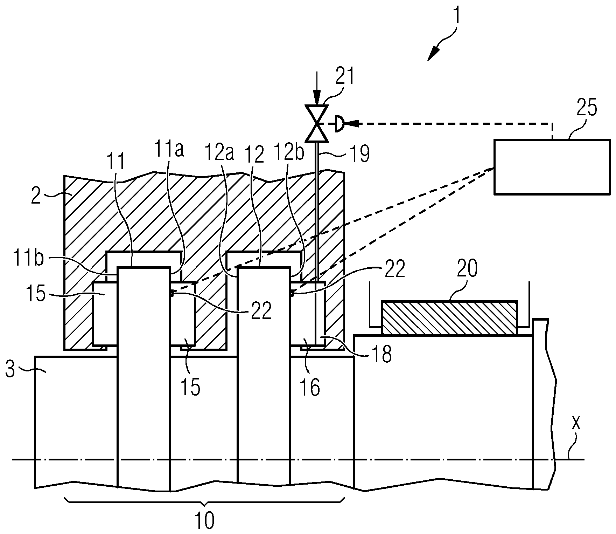

Fig. 1 shows schematically an axial bearing according to the present invention connected providing on the rotating axis of a steam turbine.

### Detailed Description

As shown in Fig. 1, an assembly 1 includes a stationary housing 2, a rotational shaft 3 and a thrust bearing 10 provided between stationary housing 2 and the rotational shaft 3. The rotational shaft 3 axially extends along a central axis of rotation X. The rotational shaft 3 is rotatable with respect to the stationary housing 2 about the axis of rotation X. The assembly 1 is integrated in a steam turbine, not shown and described in greater detail. According to other embodiments of the present invention, the assembly 1 may be integrated in another type of rotating machine, for example a gas turbine. On the rotational shaft 3 a journal bearing 20 is further provided at an axially distanced position from the thrust bearing 10. The journal bearing 20 is not a specific object of the present invention and therefore not described in further details.

The thrust bearing 10 is a two-stage bearing comprising two discs 11, 12, which are fixed to the rotational shaft 3 at axially distanced positions. According to other embodiments of the present invention (not shown), the thrust bearing 10 is a multi-stage bearing comprising a plurality of discs, for example three or more discs. More in detail, the thrust bearing 10 comprises a main disc 11 and an auxiliary disc 12. The main disc 11 comprises a first annular face 11a on the side towards the auxiliary disc 12 and an axially opposite second annular face 11b. On both the first and the second annular faces 11a, 11b a respective set of axial main pads 15 are provided (one axial main pad 15 is visible in fig. 1 for each set of main axial pads). The axial main pads 15 are connected to the stationary housing 2. The auxiliary disc 12 comprises a first annular face 12a on the side towards the main disc 11 and an axially opposite second annular face 12b. On the second annular faces 12b a set of axial auxiliary pads 16 are provided (one axial auxiliary pad 16 is visible in fig. 1).

According to other embodiments of the present invention (not shown), the thrust bearing 10 comprises one main disc 11 and a plurality of auxiliary discs 12. According to further embodiments of the present invention (not shown), the thrust bearing 10 comprises a plurality of main discs 11 and a plurality of auxiliary discs 12.

The axial auxiliary pads 16 are interposed between the second annular faces 12b and a pressurized cavity 18 provided in the stationary housing 2. The pressure in the pressurized cavity 18 is variable, in order to variate an axial thrust force which is transmitted to the auxiliary disc 12 and to the rotating shaft 3 through the axial auxiliary pads 16. In the pressurized cavity 18 high-pressure hydraulic oil is provided through an oil feeding duct 19 on which a regulating valve 21 is provided. The pressurized cavity 18, the oil feeding duct 19 and the regulating valve 21 are comprised in a pressurized actuation which is connected to a controller 25 for controlling the axial force which is transmitted to the auxiliary disc 12 through the axial auxiliary pads 16. To such purpose, the opening rate of the regulating valve 21 may be controlled through the controller 25. The controller 25 is connected on a plurality of temperature sensors 22 for measuring the temperature of the main disc 11 and the auxiliary disc 12. The temperature sensors 22 are provided on the axial pads 15, 16 in respective positions adjacent to the main disc 11 and the auxiliary disc 12. In the embodiment of figure 1, temperature sensors 22 are provided on the set of axial main pads 15 adjacent to the first annular face 11a of the main disc 11 and on the set of axial auxiliary pads 16. According to further embodiments of the present invention (not shown), temperature sensors 22 may be also provided on the set of axial main pads 15 adjacent to the second annular face 11b. The controller 25 regulate the regulating valve 21 based on the readings of the temperature sensors 22.

The aim of the regulation is to have similar value of the temperature at each of the axial pads 15, 16 by controlling the pressure inside the pressurized cavity 18. A difference of temperature between the main axial pads 15 and the axial auxiliary pads 16 reveals an irregularity in the distribution of axial forces between the main disc 11 and the auxiliary disc 12. By increasing the pressure into the pressurized cavity 18 an axial thrust force is transmitted to the rotating shaft 3 which compensates for such irregularity. The controller 25 intervenes for increasing the pressure inside the pressurized cavity 18 by regulating the regulating valve 21, when the absolute value of the difference of temperature between the main axial pads 15 and the axial auxiliary pads 16 is greater than a predefined temperature threshold. According to possible embodiment of the invention, such temperature threshold may be comprised between 1°C and 10°C, for example 5°C. The controller 25 operates in feedback loop with the sensors 22. When the sensors 22 permit to identify that absolute value of the difference of temperature between the main axial pads 15 and the axial auxiliary pads 16 is lower than the predefined temperature threshold, the increase of the pressure inside the pressurized cavity 18 is stopped. An additional pressure sensor may be installed inside the pressurized cavity 18 for increasing safety of the system, for example preventing that the pressure inside the pressurized cavity 18 reaches potentially dangerous values. A pressure loss inside the pressurized cavity 18 may also be identified and consequent measures may be taken, for example a shutdown command may be generated.

In embodiments where one main disc 11 and a plurality of auxiliary discs 12 are used, each of the auxiliary discs 12 may include axial auxiliary pads 16 where temperature sensors 22 are provided. The controller 25 may determines a plurality of temperature differences between the measurements obtained from each temperature sensor 22 associated with a respective auxiliary disc 12 and the measurement obtained from the temperature sensor 22 associated with the main disc 11. The regulation of the pressure inside the pressurized cavity 18 may be based on the greatest of the temperature differences above defined or on the mean value of such temperature differences.

## Claims

1. An axial bearing (10) system comprising:
a stationary housing (2),
a rotational shaft (3) which is rotatable with respect to the stationary housing (2) about an axis of rotation (X),
at least one main disc (11) fixed to the rotational shaft (3),
at least one auxiliary disc (12) fixed to the rotational shaft (3) and distanced from the main disc (11) along the axis of rotation (X),
at least one axial main pad (15) connected to the stationary housing (2) and active on at least one annular face (11a, 11b) of the main disc (11),
at least one axial auxiliary pad (16) active on an annular face (12b) of the auxiliary disc (12), an axial force transmitted to the auxiliary disc (12) through the axial auxiliary pad (16) being regulatable through a pressurised actuation (18, 19, 21), **characterised in that** it comprises
a plurality of temperature sensors (22) for measuring the temperature of the main disc (11) and the auxiliary disc (12),
a controller (25) connected to the pressurised actuation (18, 19, 21) and to the temperature sensors (22) for regulating the axial force transmitted to the auxiliary disc (12) through the axial auxiliary pad (16) based on the temperature of the main disc (11) and the auxiliary disc (12) .

2. The axial bearing (10) system according to claim 1, wherein the pressurised actuation (18, 19, 21) comprises a pressurized cavity (18) provided in the stationary housing (2), the pressure in the pressurized cavity (18) being variable for variating the axial force transmitted to the auxiliary disc (12).

3. The axial bearing (10) system according to claim 2, wherein the pressurised actuation (18, 19, 21) comprises a regulating valve whose opening rate is regulatable by the controller (25).

4. The axial bearing (10) system according to any of the previous claims, wherein the temperature sensors (22) are attached to the axial main pad (15) and the axial auxiliary pad (16).

5. The axial bearing (10) system according to claim 4, wherein the temperature sensors (22) are attached to the axial main pad (15) and the axial auxiliary pad (16) in respective positions adjacent to the main disc (11) and the auxiliary disc (12).

6. The axial bearing (10) system according to any of the previous claims, wherein axial main pads (15) are provided on a first annular face (11a) and on an axially opposite second annular face (11b) of the main disc (11).

7. The axial bearing (10) system according to any of the previous claims, wherein the axial bearing (10) system comprises one main disc (11) and a plurality of auxiliary discs (12).

8. A steam turbine including the axial bearing (10) system according to any of the previous claims.

9. A method of operating the axial bearing (10) system according to any of the previous claims, wherein the method includes the following steps performed in the controller (25) :
determining at least a temperature difference between a temperature associated with the main disc (11) and a temperature associated with the auxiliary disc (12), operating the pressurised actuation (18, 19, 21) for increasing the axial force transmitted to the auxiliary disc (12) if the temperature difference is greater than a predefined temperature threshold.

10. The method according to claim 9, wherein the temperature threshold is comprised between 1° C and 10° C.

## Patentansprüche

1. Axiallager-(10)-System, das Folgendes umfasst:
ein feststehendes Gehäuse (2),
eine Rotationswelle (3), die in Bezug auf das feststehende Gehäuse (2) um eine Rotationsachse (X) drehbar ist,
mindestens eine Hauptscheibe (11), die an der Rotationswelle (3) befestigt ist,
mindestens eine Hilfsscheibe (12), die an der Rotationswelle (3) befestigt und von der Hauptscheibe (11) entlang der Rotationsachse (X) beabstandet ist,
mindestens ein axiales Hauptsegment (15), das mit dem feststehenden Gehäuse (2) verbunden und an mindestens einer ringförmigen Fläche (11a, 11b) der Hauptscheibe (11) wirksam ist,
mindestens ein axiales Hilfssegment (16), das an einer ringförmigen Fläche (12b) der Hilfsscheibe (12) wirksam ist, wobei eine über das axiale Hilfssegment (16) auf die Hilfsscheibe (12) übertragene Axialkraft über einen Druckantrieb (18, 19, 21) regulierbar ist, **dadurch gekennzeichnet, dass** es Folgendes umfasst:
mehrere Temperatursensoren (22) zum Messen der Temperatur der Hauptscheibe (11) und der Hilfsscheibe (12),
eine mit dem Druckantrieb (18, 19, 21) und den Temperatursensoren (22) verbundene Steuerung (25) zum Regulieren der über das axiale Hilfssegment (16) auf die Hilfsscheibe (12) übertragenen Axialkraft auf der Grundlage der Temperatur der Hauptscheibe (11) und der Hilfsscheibe (12) .

2. Axiallager-(10)-System nach Anspruch 1, wobei der Druckantrieb (18, 19, 21) einen in dem feststehenden Gehäuse (2) vorgesehenen, mit Druck beaufschlagten Hohlraum (18) umfasst, wobei der Druck in dem mit Druck beaufschlagten Hohlraum (18) zum Ändern der auf die Hilfsscheibe (12) übertragenen Axialkraft verstellbar ist.

3. Axiallager-(10)-System nach Anspruch 2, wobei der Druckantrieb (18, 19, 21) ein Regelventil umfasst, dessen Öffnungsrate über die Steuerung (25) regulierbar ist.

4. Axiallager-(10)-System nach einem der vorhergehenden Ansprüche, wobei die Temperatursensoren (22) an dem axialen Hauptsegment (15) und dem axialen Hilfssegment (16) angebracht sind.

5. Axiallager-(10)-System nach Anspruch 4, wobei die Temperatursensoren (22) an dem axialen Hauptsegment (15) und dem axialen Hilfssegment (16) jeweils in Positionen neben der Hauptscheibe (11) und der Hilfsscheibe (12) angebracht sind.

6. Axiallager-(10)-System nach einem der vorhergehenden Ansprüche, wobei axiale Hauptsegmente (15) an einer ersten ringförmigen Fläche (11a) und an einer axial gegenüberliegenden zweiten ringförmigen Fläche (11b) der Hauptscheibe (11) vorgesehen sind.

7. Axiallager-(10)-System nach einem der vorhergehenden Ansprüche, wobei das Axiallager-(10)-System eine Hauptscheibe (11) und mehrere Hilfsscheiben (12) umfasst.

8. Dampfturbine mit dem Axiallager-(10)-System nach einem der vorhergehenden Ansprüche.

9. Verfahren zum Betreiben des Axiallager-(10)-Systems nach einem der vorhergehenden Ansprüche, wobei das Verfahren folgende in der Steuerung (25) durchgeführte Schritte umfasst:
Bestimmen von zumindest einer Temperaturdifferenz zwischen einer mit der Hauptscheibe (11) und einer mit der Hilfsscheibe (12) verknüpften Temperatur,
Betreiben des Druckantriebs (18, 19, 21) zum Erhöhen der auf die Hilfsscheibe (12) übertragenen Axialkraft, wenn die Temperaturdifferenz größer ist als ein vorgegebener Temperaturgrenzwert.

10. Verfahren nach Anspruch 9, wobei der Temperaturgrenzwert zwischen 1°C und 10°C liegt.

## Revendications

1. Système de palier axial (10) comprenant :
un logement stationnaire (2),
un arbre rotatif (3) qui est apte à être mis en rotation par rapport au logement stationnaire (2) autour d'un axe de rotation (X),
au moins un disque principal (11) fixé à l'arbre rotatif (3),
au moins un disque auxiliaire (12) fixé à l'arbre rotatif (3) et à distance du disque principal (11) le long de l'axe de rotation (X),
au moins un coussinet principal axial (15) relié au logement stationnaire (2) et actif sur au moins une face annulaire (11a, 11b) du disque principal (11),
au moins un coussinet auxiliaire axial (16) actif sur une face annulaire (12b) du disque auxiliaire (12), une force axiale transmise au disque auxiliaire (12) par le biais du coussinet auxiliaire axial (16) étant apte à être régulée par le biais d'un actionnement sous pression (18, 19, 21),
**caractérisé en ce qu'**il comprend
une pluralité de capteurs de température (22) pour mesurer la température du disque principal (11) et du disque auxiliaire (12),
un dispositif de commande (25) relié à l'actionnement sous pression (18, 19, 21) et aux capteurs de température (22) pour réguler la force axiale transmise au disque auxiliaire (12) par le biais du coussinet auxiliaire axial (16) sur la base de la température du disque principal (11) et du disque auxiliaire (12) .

2. Système de palier axial (10) selon la revendication 1, dans lequel l'actionnement sous pression (18, 19, 21) comprend une cavité sous pression (18) ménagée dans le logement stationnaire (2), la pression dans la cavité sous pression (18) étant variable pour faire varier la force axiale transmise au disque auxiliaire (12) .

3. Système de palier axial (10) selon la revendication 2, dans lequel l'actionnement sous pression (18, 19, 21) comprend une vanne de régulation dont le taux d'ouverture est apte à être régulé par le dispositif de commande (25).

4. Système de palier axial (10) selon l'une quelconque des revendications précédentes, dans lequel les capteurs de température (22) sont fixés au coussinet principal axial (15) et au coussinet auxiliaire axial (16).

5. Système de palier axial (10) selon la revendication 4, dans lequel les capteurs de température (22) sont fixés au coussinet principal axial (15) et au coussinet auxiliaire axial (16) à des positions respectives adjacentes au disque principal (11) et au disque auxiliaire (12).

6. Système de palier axial (10) selon l'une quelconque des revendications précédentes, dans lequel des coussinets principaux axiaux (15) sont ménagés sur une première face annulaire (11a) et sur une seconde face annulaire (11b) axialement opposée du disque principal (11).

7. Système de palier axial (10) selon l'une quelconque des revendications précédentes, dans lequel le système de palier axial (10) comprend un disque principal (11) et une pluralité de disques auxiliaires (12).

8. Turbine à vapeur incluant le système de palier axial (10) selon l'une quelconque des revendications précédentes.

9. Procédé de fonctionnement du système de palier axial (10) selon l'une quelconque des revendications précédentes, dans lequel le procédé inclut les étapes suivantes réalisées dans le dispositif de commande (25) :
la détermination d'au moins une différence de température entre une température associée au disque principal (11) et une température associée au disque auxiliaire (12),
la mise en fonctionnement de l'actionnement sous pression (18, 19, 21) pour augmenter la force axiale transmise au disque auxiliaire (12) si la différence de température est supérieure à un seuil de température prédéfini.

10. Procédé selon la revendication 9, dans lequel le seuil de température est compris entre 1° C et 10° C.
